# EUROPÄISCHE PATENTSCHRIFT

(11) **EP 3 014 252 B1**
(45) Veröffentlichungstag und Bekanntmachung des Hinweises auf die Patenterteilung: **13.01.2021**
(21) Anmeldenummer: 14720047.1
(22) Anmeldetag: 25.04.2014
(51) Int. Cl.: G01N 21/85, D01G 31/00, G01N 21/89

(54) **VORRICHTUNG IN DER SPINNEREIVORBEREITUNG, GINNEREI O. DGL. ZUM ERKENNEN VON GLEICHFARBIGEN ODER GLEICHHELLEN FREMDTEILEN ODER STÖRSTELLEN**
DEVICE IN SPINNING PREPARATION, GINNING OR THE LIKE FOR IDENTIFYING FOREIGN BODIES OF THE SAME COLOUR OR THE SAME BRIGHTNESS OR IMPERFECTIONS
DISPOSITIF DANS LA FILATURE PRÉPARATOIRE, DANS UNE USINE D'ÉGRENAGE OU ANALOGUES, PERMETTANT DE RECONNAÎTRE DES PARTIES ÉTRANGÈRES DE MÊME COULEUR OU DE MÊME ÉCLAT OU BIEN DES DÉFAUTS

(30) Priorität: 24.06.2013 DE 102013010466
(43) Veröffentlichungstag der Anmeldung: 04.05.2016
(73) Patentinhaber: Trützschler GmbH & Co. KG, 41199 Mönchengladbach (DE)
(72) Erfinder: ENGELS, Guido, 41569 Rommerskirchen (DE)
(86) Internationale Anmeldenummer: PCT/EP2014/001104
(87) Internationale Veröffentlichungsnummer: WO 2014/206509

(56) Entgegenhaltungen:
- DE-A1- 10 347 240
- DE-A1-102008 031 199
- DE-A1-102008 034 385
- DE-A1-102010 055 523
- US-A- 5 777 673

## Beschreibung

Die Erfindung betrifft eine Vorrichtung in der Spinnereivorbereitung, Ginnerei o. dgl. zum Erkennen von Fremdteilen oder Störstellen in oder zwischen einem Fasermaterialstrom (Faserflocken), z. B. aus Baumwolle, bei der mit Hilfe einer Quelle für polarisiertes Licht, die mit einer Detektoreinrichtung (Kamera) zusammenwirkt, Fremdteile in oder zwischen dem Fasermaterial beleuchtbar sind.

Ein Problem beim Betrieb von optisch arbeitenden Inspektionsanlagen ist die Unterscheidung von Gutfasermaterial von eventuell vorhandenen gleichfarbigen oder gleich hellen Fremdkörpern oder Störstellen. Aus der DE 10 2008 031 119A1 ist eine Vorrichtung mit Verwendung von infrarotem Licht, der Verwendung von UV-Licht (Fluoreszenzeffekte) oder der kombinierten Anwendung von polarisiertem Durchlicht und UV-Licht bekannt. Die DE 10 2010 055 523 A1 beschreibt eine Vorrichtung, bei der an einer Inspektionsstelle Farbinformationen und Polarisationszustand erfasst werden, wozu eine komplizierte Beleuchtung erforderlich ist.

Der Erfindung liegt die Aufgabe zugrunde, eine Vorrichtung der eingangs beschriebenen Art zu schaffen, die die genannten Nachteile vermeidet, die insbesondere auf konstruktiv einfache Art die sichere Erfassung von Farbe und Polarisationszustand ermöglicht.

Die Lösung dieser Aufgabe erfolgt durch die kennzeichnenden Merkmale des Anspruchs 1.

Die Erfindung umfasst eine vorteilhafte Vorrichtung für eine 4 Sensoren Kamera mit Strahlteiler, welche gleichzeitig die Farbinformation und den linearen Polarisationszustand des Lichtes erfasst und dabei im gleichen Wellenlängenbereich arbeitet.

Die Unteransprüche haben vorteilhafte Weiterbildungen der Erfindung zum Inhalt.

Vorzugswiese wird die polarisierende Strahlteilerschicht mit Einfallswinkeln größer 45° ausgelegt wird.

Weiter vorzugsweise sind mindestens zwei der verwendeten Prismenkeile symmetrisch zueinander.

Vorteilhafterweise wird die in verschiedene Polarisationszustände getrennte und erfasste Bildinformation rechnerisch wieder zur vollständigen Farbinformation zusammengefasst.

Vorzugsweise werden die erforderlichen Sensoren für das unpolarisierte Licht des einen Wellenlängenbereiches in ein Gehäuse zusammen mit den Sensoren für das polarisierte Licht des anderen Wellenlängenbereiches angeordnet.

Zur Abdeckung einer großen Arbeitsbreite arbeiten vorzugsweise mehrere Detektionsvorrichtungen in Abschnitten parallel nebeneinander.

Vorzugsweise weist die Vorrichtung eine Kamerasichtlinie aufweist, durch Spiegel oder Prismen gefaltet wird. Dadurch wird der Bauraum reduziert.

Vorzugsweise umfasst die Detektionsvorrichtung eine Auswerteeinrichtung.

Das Kamerasystem weist vorzugsweise mindestens eine Kamera mit einem Polarisationsfilter als Analysator auf.

Vorzugsweise weist die Kamera einen Filter aufweist, der den Durchtritt von UV-Licht und/oder infrarotem Licht verhindert.

Vorzugsweise ist an die vorgenannte Auswerteeinrichtung eine in Förderrichtung nach der Detektionszone angeordnete Ausscheidevorrichtung zum Ausscheiden der Fremdstoffe angeschlossen ist.

Vorzugsweise ist das Licht linear, zirkular oder elliptisch polarisiert.

Die vorgenannte Lichtquelle für polarisiertes Licht und die Detektoreinrichtung sind vorzugsweise auf verschiedenen Seiten der Faserflocken angeordnet sind (Durchlichtanordnung).

Vorzugsweise erfolgt zum Erkennen eine Reflexunterdrückung.

Alle vorgenannten Vorrichtungen können zum Erkennen von gleichfarbigen oder gleichhellen Fremdteilen oder Störstellen in oder zwischen einem Fasermaterialstrom (Faserflocken), z. B. aus Baumwolle, vorgesehen sein.

Vorzugsweise kann das Fasermaterial in einem Kanal aus Glas o. dgl. angeordnet sein.

Bevorzugt kann das Fasermaterial durch einen Kanal pneumatisch gefördert werden oder alternativ auf einem Förderband angeordnet sein.

Eine weitere Verbesserung kann dadurch erreicht werden, dass das Fasermaterial auf einer Walze, z. B. Schlagwalze, angeordnet ist. Dabei kann die Walze schnell rotieren.

Vorzugsweise kann die Detektionsvorrichtung als Zeilenkamera ausgebildet sein. Alternativ ist die Ausbildung als Matrixkamera möglich.

Bevorzugt kann die Detektionsvorrichtung Lichtsensoren umfassen.

Vorzugsweise kann eine Detektion mit Farbe erfolgen.

In einer weiteren Ausgestaltung kann die Detektion mit schwarz/weiß erfolgen.

Eine Verbesserung kann dadurch erfolgen, dass zwischen Lichtquelle und Fasermaterial ein Polarisator angeordnet ist.

Vorzugsweise kann eine Lichtquelle vorhanden sein, die polarisiertes Licht ausstrahlt.

Bevorzugt kann der Polarisator an oder innerhalb der Lichtquelle integriert sein.

Eine weitere Verbesserung kann dadurch erfolgen, dass zwischen dem Fasermaterial und der Detektoreinrichtung ein Analysator angeordnet ist.

Dabei kann ein Detektor vorhanden sein, der auch als Analysator wirkt.

Vorzugsweise kann der Analysator an oder innerhalb des Detektors integriert sein.

Vorzugsweise können im Strahlengang Licht reflektierende Elemente angeordnet sein.

Bevorzugt können im Strahlengang Licht brechende Elemente angeordnet sein. Diese können als Spiegel, Prismen oder Linsen ausgebildet sein.

Vorzugsweise ist der Auswerteeinrichtung eine Einrichtung zur Entfernung (Abscheidung) der Fremdteile nachgeschaltet.

Bevorzugt können die Auswertung und die Entfernungseinrichtung (Abscheideeinrichtung) durch eine Steuer- oder Schalteinrichtung elektrisch miteinander verbunden sein.

Dabei kann die Vorrichtung nach einer Reinigungsvorrichtung angeordnet sein.

Vorzugsweise kann die Vorrichtung in einer Karde oder nach einer Karde angeordnet sein.

Alternativ kann die Vorrichtung nach einem Fremdfaserausscheider angeordnet sein.

Eine weitere Verbesserung kann dadurch erreicht werden, dass zum Erkennen Anisotropien wie doppelbrechende Wirkung der Fremdteile herangezogen wird.

Vorzugsweise kann zum Erkennen selektiv absorbierendes Verhalten (Dichroismus) der Fremdteile herangezogen werden.

Bevorzugt kann zum Erkennen optisch aktives Verhalten (Rotationsdispersion) der Fremdteile herangezogen werden.

Dabei kann die Detektionsvorrichtung aufgrund ihrer Auflösung flächenförmige von faserförmigen Fremdteilen zu unterscheiden vermögen.

Eine weitere Verbesserung kann dadurch erreicht werden, dass die Lichtquelle als linienförmige Beleuchtung zur Ausleuchtung der Arbeitsbreite ausgelegt ist.

Dabei kann die Lichtquelle aus mehreren aneinander gereihten Einzellichtquellen zur Ausleuchtung der Arbeitsbreite ausgelegt sein.

Alternativ kann die Lichtquelle aus einer einzelnen, z. B. punktförmigen, Lichtquelle bestehen, welche über eine Projektionsvorrichtung die Ausleuchtung der Arbeitsbreite herstellt.

Vorzugsweise kann das Licht der Lichtquelle durch Reflektoren oder Linsen auf die zu inspizierende Oberfläche gebündelt werden.

Bevorzugt kann die Lichtquelle einen Filter enthalten, welcher alle unerwünschten Wellenlängen sperrt und somit nur UV-Licht passieren lässt.

Vorzugsweise kann der Kanal senkrecht oder waagerecht angeordnet sein.

Vorzugsweise kann das Fasermaterial von oben nach unten oder von unten nach oben durch den Kanal gefördert werden.

Vorzugsweise kann die einer Öffnerwalze nachgeordnete Vorrichtung nicht unmittelbar im Abgabebereich der Öffnerwalze angeordnet sein.

Die Erfindung wird nachfolgend anhand von zeichnerisch dargestellten Ausführungsbeispielen näher erläutert.

Es zeigt:
- Fig. 1: schematisch ein Strahlteilerprisma einer erfindungsgemäßen Ausführung einer 4-Sensoren-Kamera,
- Fig. 2: schematisch die Aufspaltung des Lichts an dem Strahlteilerprisma gem. Fig. 1,
- Fig. 3: eine Vorrichtung mit mehr als einer Detektionseinrichtung,
- Fig. 4: die Integration der Detektionseinrichtung in einer Maschine mit durchgehendem Förderschacht mit nachfolgender Ausscheidevorrichtung,
- Fig. 5: die Integration der erfindungsgemäßen Vorrichtung direkt hinter einer Öffnungswalze und
- Fig. 6: die Installation der Inspektionsstelle nach der Öffnerwalze.

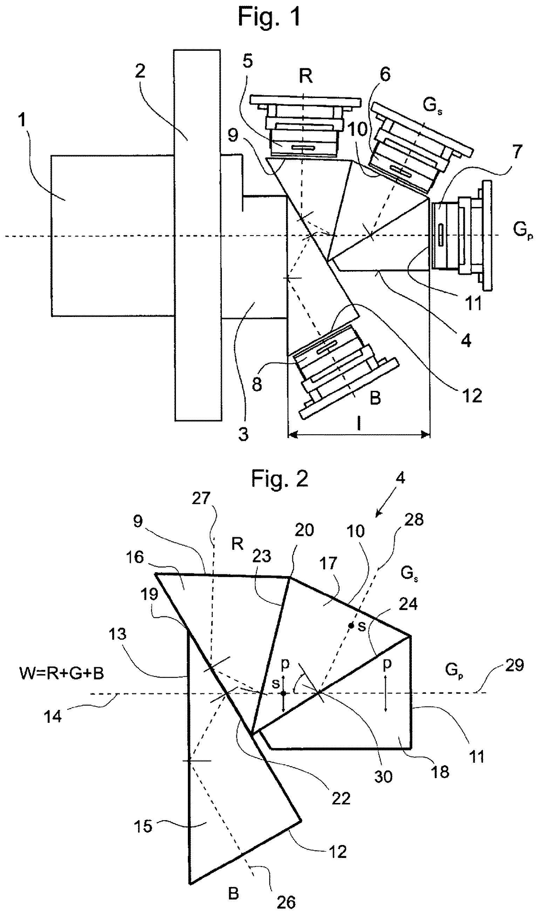

Fig. 1 zeigt beispielhaft das Strahlteilerprisma 4 einer erfindungsgemäßen Ausführung einer 4-Sensoren Kamera, welche obige Nachteile beseitigt und dafür sorgt, dass sowohl Farbinformation als auch der Polarisationszustand des Lichtes gemeinsam in einer Vorrichtung bzw. Kamera zur Anwendung kommen können.

Das aus 4 Prismenkeilen bestehende Strahlteilerprisma 4 ist über einen Sockel 3 an einer Kamerafrontplatte 2 befestigt. An der Kamerafrontplatte ist von der anderen Seite das Objektiv 1 der Kamera montiert. Das Objektiv 1 bildet die zu beobachtende Objektszene durch das Strahlteilerprisma 4 auf die 4 Sensoren 5, 6, 7 und 8 ab. Als Sensoren sind hier beispielhaft CCD-Zeilensensoren gewählt, welche entlang ihrer Längsachse, jeweils an einem der 4 Austrittsflächen 9, 10, 11 und 12 des Strahlteilerprismas 4 angeordnet und zueinander justiert sind.

Fig. 2 zeigt die Aufspaltung des Lichtes an dem Strahlteilerprisma 4. Das auf die Eintrittsfläche 13 einfallende weiße Licht W bestehend aus einem roten R, grünen G und blauen B Wellenlängenbereich, hier beispielhaft anhand eines Lichtstrahles auf der optischen Achse 14 dargestellt, durchläuft ein Prisma 15, bis es auf eine dichroitische Filterschicht 22 trifft. Dort wird der blaue Anteil B des Lichtes reflektiert, so dass es nach Totalreflexion an der Eintrittsfläche 13 im weiteren Verlauf an der Austrittsfläche 12 austritt und dort als beispielhafter gezeichneter blauer Strahl 26 auf den Zeilensensor 8 fällt. Das restliche Licht durchläuft einen Luftspalt 19, welcher zwischen Prismen 15 und 16 angeordnet ist, dann tritt es in das Prisma 16 ein und durchläuft es bis zu einer Filterschicht 23. An der Filterschicht 23 wird nun der rote Anteil des Lichtes reflektiert, im weiteren Verlauf am Luftspalt 19 durch Totalreflexion in Richtung Austrittsfläche 9 umgelenkt und trifft dort als beispielhafter gezeichneter roter Lichtstrahl 27 den Sensor 5 gemäß Fig. 1. Nach dem Filter 23 bleibt nun nur noch Licht der grünen Wellenlänge übrig. Dieses wird nun im weiteren Verlauf in seine beiden Polarisationsrichtungen s und p aufgespalten. Hierzu fällt es nun nach Durchlauf durch das Prisma 17 auf die polarisierende Strahlteilerschicht 24, wo der s-polarisierte Anteil des Lichtes reflektiert und der p-polarisierte Anteil des Lichtes in Richtung Prisma 18 durchgelassen wird. Der s-polarisierte Anteil Gₛ tritt an der Austrittsfläche 10 als beispielhaft gezeichneter Lichtstrahl 28 aus und beleuchtet dort den Sensor 6 gemäß Fig. 1. Der übrig bleibende p-polarisierte Anteil Gₚ, beispielhaft als Lichtstrahl 29 gezeichnet, durchläuft das Prisma 18 und tritt an der Austrittfläche 11 aus, wonach er auf den Sensor 7 gemäß Fig. 1 fällt.

Die Bildsensoren 5, 6, 7 und 8 sind an eine (nicht dargestellte) Signalvorverarbeitungs- bzw. Bildauswerteeinrichtung angeschlossen. Da die Sensoren 5 - 8 zueinander genau ausgerichtet werden, stimmt die räumliche Zuordnung der Bildinformation bildpunktweise überein. In der Auswerteeinrichtung kann daher die ursprüngliche Grüninformation G vollständig durch Addition des Gₛ und des Gₚ Kanales rekonstruiert werden. G = Gₛ + Gₚ. Man erhält also mit 4 Sensoren zum einen die vollständige Farbinformation R, G und B als auch die Polarisationsinformation Gₛ und Gₚ.

Der rote und blaue Wellenlängenbereich ist für die Bestimmung des Polarisationszustandes nicht nötig, wohl aber für die Farbe. Dadurch, dass zuerst eine Abspaltung der Wellenlängen für den roten und blauen Wellenlängenbereich erfolgt, ist die Auslegung der polarisierenden Strahlteilerschicht 24 erst sinnvoll möglich.

Ein günstige Auslegung dieses Strahlteilerprismas erhält man dann, wenn man im Gegensatz zu bekannten 4-Sensoren Konstruktionen (wie z. B. in US 5777673 beschrieben) an der Grenzfläche 20 zwischen Prisma 16 und 17 keinen Luftspalt vorsieht und daher der Weg des Lichtstrahles 28, nach der polarisierenden Strahlteilerschicht 24 nicht noch einmal durch Totalreflexion umgelenkt wird. Man ist dann mit der Wahl des Einfallswinkels 30 wesentlich freier und kann diesen deutlich größer als die üblichen 45° wählen, was vorteilhaft für die Auslegung der polarisierenden Strahlteilerschicht 24 ist. Würde man den Lichtstrahl 28 dagegen noch einmal an einem Luftspalt zwischen Prisma 16 und 17 umlenken (siehe z. B. US 5777673), so ergeben sich Einfallswinkel 30 von deutlich kleiner als 45°, was wiederum ungünstig für die Auslegung einer effektiven Strahlteilerschicht 24 ist.

Eine günstige Auslegung des Strahlteilerprismas 4 liegt zusätzlich dann vor, wenn die Gesamtglasstrecke I in Fig. 1 möglichst klein ist, da eine kleine Glasstrecke günstig für die Auslegung des Objektives 1 ist. Nun kann man aber das Prisma 4 nicht beliebig klein skalieren, weil der Bauraum inklusive Zwischenraum für die Sensoren 5, 6, 7 und 8 vorhanden sein muss. Eine optimal kleine Glasstrecke I erreicht man genau dann, wenn die von den Austrittsflächen 9, 10, 11, und 12 austretenden Lichtstrahlen 26, 27, 28 und 29 divergieren d.h. auseinander laufen und gleichzeitig mindestens zwei Prismenkeile symmetrisch zueinander sind, z. B. wie in Fig. 2 dargestellt die Prismenkeile 16 und 17 und/oder die Prismenkeile 11 und 15.

Bei großen Kanalbreiten kann es vorteilhaft sein, mehrere Detektionsvorrichtungen nach den Figuren 1 und 2 über die Arbeitsbreite so zu verteilen, dass jede nur für einen Abschnitt des Kanals zuständig ist. Aber auch hier gilt, dass je Abschnitt beide Erkennungsverfahren mit nur einem Detektor und einer Auswerteinheit realisiert werden können.

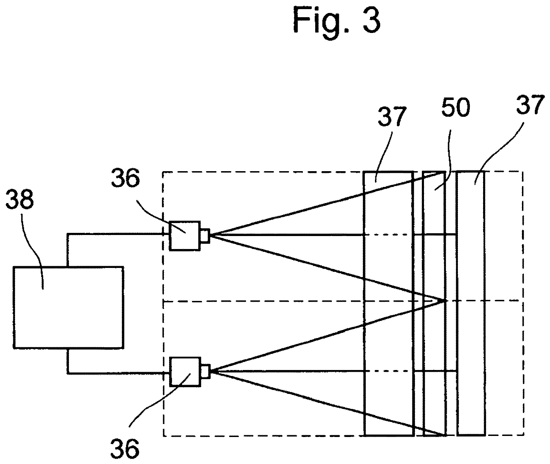

Fig. 3 zeigt eine solche Anordnung, aus einer Blickrichtung mit Materialförderrichtung senkrecht zur Darstellungsebene, in welcher mehrere Detektionsvorrichtungen 36 nebeneinander angeordnet sind um eine große Arbeitsbreite abzudecken. Mit 37 sind Beleuchtungsmodule bezeichnet. Die Bezugsziffer 38 zeigt z. B. eine Auswerteeinheit, an welche mehrere Detektionsvorrichtungen angeschlossen sind.

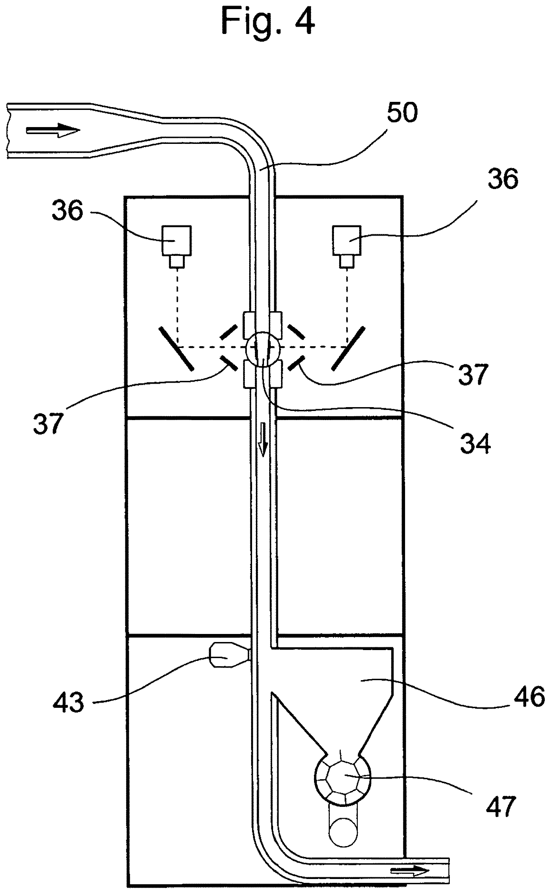

Fig. 4 zeigt die Integration der Detektionsvorrichtungen nach Abbildungen 1 bis 3 in einer Maschine mit durchgehendem Förderschacht 50 mit nachfolgender Ausscheidevorrichtung. Die Detektionsvorrichtung erlaubt mit polarisiertem Durchlicht, transparente oder teiltransparente bzw. fluoreszierende Fremdteile zu erkennen. Hierzu wird die Kamera 36 verwendet. Über den Düsenbalken 43 werden erkannte Fremdteile aus der Inspektionsstelle 34 in den Abfallraum 46 befördert, von wo sie über eine Zellradschleuse 47 aus der Maschine befördert werden.

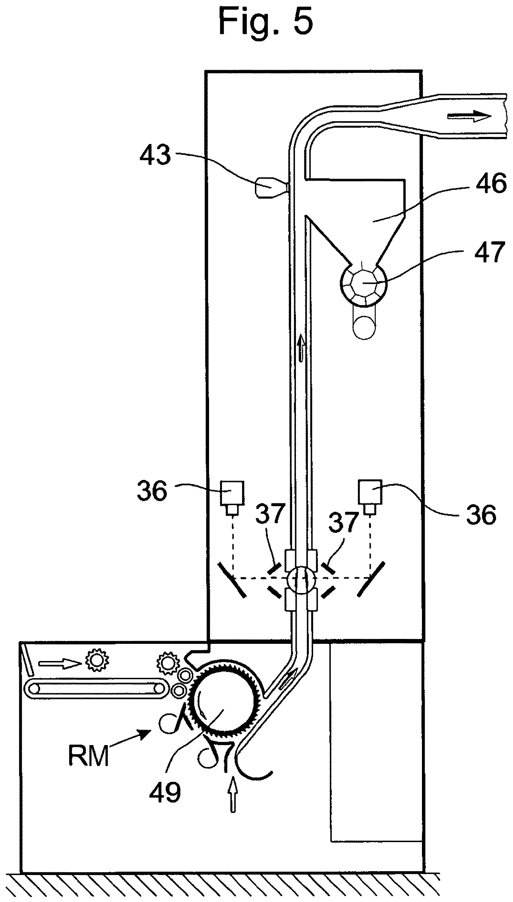

Fig. 5 zeigt die Integration der Detektionsvorrichtungen nach Figuren 1 bis 3 direkt hinter einer Öffnungswalze 49, z. B. einer Reinigungsmaschine RM. Der pneumatische Förderschacht 50 ist senkrecht angeordnet.

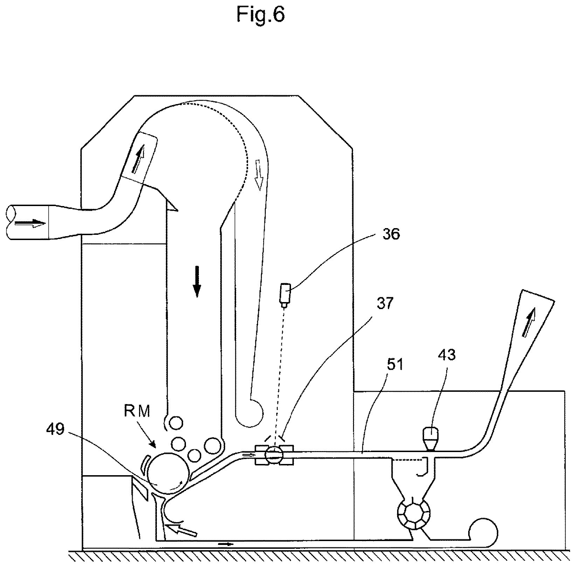

Fig. 6 zeigt die Installation der Inspektionsstelle an einer horizontal angeordneten pneumatischen Förderleitung 51 nach der Öffnungswalze 49.

### Bezugszeichenliste

- 1: Objektiv
- 2: Kamerafrontplatte
- 3: Sockel
- 4: Strahlteilerprisma
- 5 - 8: Sensor
- 9 - 12: Austrittsfläche
- 13: Eintrittsfläche
- 14: optische Achse
- 15 - 18: Prisma, Prismenkeil
- 19: Luftspalt
- 20: Grenzfläche
- 22: dichroitische Filterschicht
- 23: Filterschicht
- 24: polarisierende Strahlteilerschicht
- 26: blauer Lichtstrahl
- 27: roter Lichtstrahl
- 28, 29: Lichtstrahl
- 30: Einfallswinkel
- 34: Inspektionsstelle
- 36: Detektionsvorrichtung; Kamera
- 37: Beleuchtungsmodul
- 38: Auswerteeinheit
- 43: Düsenbalken
- 46: Abfallraum
- 47: Zellradschleuse
- 49: Öffnungswalze
- 50: durchgehender Förderschacht
- 51: pneumatische Förderleitung
- s, p: Polarisationsrichtung
- B, R: Farbinformation
- G: Grüninformation; Farbinformation
- Gₚ: p-polarisierter Anteil; Polarisationsinformation
- Gₛ: s-polarisierter Anteil; Polarisationsinformation
- I: Gesamtglasstrecke
- RM: Reinigungsmaschine
- W: weißes Licht

## Patentansprüche

1. Vorrichtung in der Spinnereivorbereitung, Ginnerei o. dgl. zum Erkennen von Fremdteilen oder Störstellen in einem Fasermaterialstrom oder zwischen Faserflocken,
• aufweisend
- eine Detektoreinrichtung (4 - 8) sowie
- eine Quelle, eingerichtet,
- mittels polarisierten Lichts (Gₚ, G_{S}) Fremdteile in dem Fasermaterial oder zwischen den Faserflocken zu beleuchten und
- mit der Detektoreinrichtung (5 - 8) zusammenzuwirken,
• wobei die Detektoreinrichtung (4 - 8) eine Kamera umfasst,
- aufweisend
• eine Strahlteilervorrichtung (4) aus Prismenkeilen (15, 16, 17, 18),
□ eingerichtet, einen Wellenlängenbereich abzuspalten, und
□ mit einer polarisierenden Strahlteilerschicht (24), eingerichtet, einen verbleibenden Wellenlängenbereich in zwei oder mehrere Polarisationszustände aufzuteilen,
• erste Bildsensoren (5, 8) von mindestens einem Wellenlängenbereich, eingerichtet, den abgespalteten Wellenlängenbereich zu erfassen, und
• zweite Bildsensoren (6, 7), eingerichtet, die zwei oder mehreren Polarisationszustände des verbleibenden Wellenlängenbereichs zu erfassen, und
- eingerichtet, Farbe und Polarisationszustand zu erfassen, und
• wobei zwischen Prismenkeilen (17, 18), die nach Abspaltung des Wellenlängenbereichs angeordnet sind, Luftspalte fehlen.

2. Vorrichtung nach Anspruch 1 **dadurch gekennzeichnet, dass** die polarisierende Strahlteilerschicht (24) auf Einfallswinkel (30) größer 45° ausgelegt ist.

3. Vorrichtung nach einem der vorhergehenden Ansprüche, **dadurch gekennzeichnet, dass** mindestens zwei Prismenkeile (15 - 18) symmetrisch zueinander sind.

4. Vorrichtung nach einem der vorhergehenden Ansprüche, **gekennzeichnet durch** ein rechnerisches Wiederzusammenfassen des in verschiedene Polarisationszustände getrennten und erfassten, verbleibenden Wellenlängenbereichs.

5. Vorrichtung nach einem der vorhergehenden Ansprüche, **gekennzeichnet durch** ein Gehäuse, in dem für unpolarisiertes Licht des einen Wellenlängenbereiches erforderliche Sensoren mit Sensoren für polarisiertes Licht des anderen Wellenlängenbereiches zusammen angeordnet sind.

6. Vorrichtung nach einem der vorhergehenden Ansprüche, **gekennzeichnet durch** mehrere, in Abschnitten parallel nebeneinander arbeitende Detektionsvorrichtungen (5 - 8).

7. Vorrichtungen nach einem der vorhergehenden Ansprüche, **gekennzeichnet durch** Spiegel oder Prismen, eingerichtet, eine Kamerasichtlinie der Vorrichtung zu falten.

8. Vorrichtung nach einem der vorhergehenden Ansprüche, **dadurch gekennzeichnet, dass** die Detektionsvorrichtung eine Auswerteeinrichtung umfasst.

9. Vorrichtung nach Anspruch 8, **gekennzeichnet durch** eine Ausscheidevorrichtung, die
• an die Auswerteeinrichtung angeschlossen ist,
• in Förderrichtung nach einer Detektionszone angeordnet ist und
• eingerichtet ist, die Fremdstoffe auszuscheiden.

10. Vorrichtung nach einem der vorhergehenden Ansprüche, **dadurch gekennzeichnet, dass** die Kamera einen Polarisationsfilter als Analysator aufweist.

11. Vorrichtung nach Anspruch 10, **dadurch gekennzeichnet, dass** die Kamera einen Filter aufweist, eingerichtet, den Durchtritt von UV-Licht und/oder infrarotem Licht zu verhindern.

12. Vorrichtung nach einem der vorhergehenden Ansprüche, **gekennzeichnet durch**
• eine lineare Polarisation des Lichts,
• eine zirkulare Polarisation des Lichts oder
• eine elliptische Polarisation des Lichts.

13. Vorrichtung nach einem der vorhergehenden Ansprüche, **dadurch gekennzeichnet, dass** die Quelle für polarisiertes Licht und die Detektionsvorrichtung auf verschiedenen Seiten der Faserflocken angeordnet sind.

14. Vorrichtung nach einem der vorhergehenden Ansprüche, **gekennzeichnet durch** eine Reflexunterdrückung.

15. Vorrichtung nach einem der vorhergehenden Ansprüche, **gekennzeichnet durch** ein Erkennen gleichfarbiger oder gleichheller Fremdteile bzw. Störstellen.

## Claims

1. A device in the spinning preparation, ginnery or the like for recognizing foreign parts or impurities in a fibre material stream or between fibre tufts,
• including
- a detector device (4 to 8), as well as
- a source, adapted
- to illuminate foreign parts in the fibre material or between fibre tufts with polarized light (G_{P}, Gₛ), and
- to cooperate with the detector device (5 to 8),
• wherein the detector device (4 to 8) comprises a camera,
- including
• a beam splitter device (4) made from prismatic wedges (15, 16, 17, 18),
∘ adapted to split off a spectral range, and
∘ with a polarized beam splitter layer (24), adapted to divide a remaining spectral range into two or more polarization states,
• first image sensors (5, 8) for at least one spectral range, adapted to detect the split off spectral range, and
• second image sensors (6, 7) adapted to detect the two or more polarization states of the remaining spectral range, and
- adapted to detect colour and polarization states, and
• wherein air gaps are missing between prismatic wedges (17, 18), which are disposed after splitting off the spectral range.

2. The device according to claim 1, **characterized in that** the polarized beam splitter layer (24) is designed for incident angles (30) of more than 45°.

3. The device according to any of the preceding claims, **characterized in that** at least two prismatic wedges (15 to 18) are symmetric to each other.

4. The device according to any of the preceding claims, **characterized by** a calculated combining of the remaining spectral range, which was separated and detected in different polarization states.

5. The device according to any of the preceding claims, **characterized by** a housing, in which sensors are disposed required for non-polarized light of the one spectral range together with sensors for polarized light of the other spectral range.

6. The device according to any of the preceding claims, **characterized by** several detecting devices (5 to 8) operating in sections parallel next to each other.

7. The device according to any of the preceding claims, **characterized by** mirrors or prisms adapted to fold a line of sight of a camera of the device.

8. The device according to any of the preceding claims, **characterized in that** the detecting device comprises an evaluation unit.

9. The device according to claim 8, **characterized by** a separation device, which
• is connected to the evaluation unit,
• in conveying direction, is disposed downstream a detecting zone, and
• is adapted to separate foreign matter.

10. The device according to any of the preceding claims, **characterized in that** the camera includes a polarized filter as an analyser.

11. The device according to claim 10, **characterized in that** the camera includes a filter adapted to prevent UV-light and/or infrared light from passing.

12. The device according to any of the preceding claims, **characterized by**
• a linear polarization of the light,
• a circular polarization of the light or
• an elliptical polarization of the light.

13. The device according to any of the preceding claims, **characterized in that** the source for polarized light and the detection device are disposed on different sides of the fibre tufts.

14. The device according to any of the preceding claims, **characterized by** reflex suppression.

15. The device according to any of the preceding claims, **characterized by** recognizing foreign parts, respectively impurities of the same colour or brightness.

## Revendications

1. Dispositif dans la préparation à la filature, usine d'égrenage ou similaire, pour reconnaître des corps étrangers ou des impuretés dans un flux de matière de fibres ou entre des flocons de fibre,
• présentant
- un dispositif détecteur (4 à 8), de même que
- une source, adaptée
- au moyen de lumière polarisée (G_{P}, Gₛ), à illuminer des corps étrangers dans la matière de fibres ou entre les flocons de fibre, et
- à coopérer avec le dispositif détecteur (5 à 8),
• le dispositif détecteur (4 à 8) comportant une caméra,
- présentant
• un dispositif séparateur de faisceaux (4) fait de coins prismatiques (15,16, 17, 18),
∘ adapté à séparer un domaine spectral, et
∘ avec une couche de séparateur de faisceaux (24), adaptée à diviser un domaine spectral restant en deux ou plus d'états de polarisation,
• des premiers capteurs d'image (5, 8) d'au moins un domaine spectral, adaptés à détecter le domaine spectral séparé, et
• des deuxièmes capteurs d'image (6, 7) adaptés à détecter les deux ou plus d'états de polarisation du domaine spectral restant, et
- adaptés à détecter couleur et état de polarisation, et
• des espaces d'air manquant entre des coins prismatiques (17, 18), qui sont agencés en aval de la séparation du domaine spectral.

2. Dispositif selon la revendication 1, **caractérisé en ce que** la couche de séparateur de faisceaux (24) polarisante étant spécifiée pour un angle d'incidence (30) plus grand que 45°.

3. Dispositif selon l'une des revendications précédentes, **caractérisé en ce qu'**au moins deux coins prismatiques (15 à 18) sont symétriques l'un à l'autre.

4. Dispositif selon l'une des revendications précédentes, **caractérisé par** un regroupement arithmétique du domaine spectral restant séparé en différents états de polarisation et détecté.

5. Dispositif selon l'une des revendications précédentes, **caractérisé par** un boîtier dans lequel des capteurs requis pour la lumière non-polarisée d'un domaine spectral sont agencés ensemble avec des capteurs pour la lumière polarisée de l'autre domaine spectral.

6. Dispositif selon l'une des revendications précédentes, **caractérisé par** plusieurs dispositifs de détection (5 à 8) fonctionnant par sections en parallèle l'un à côté de l'autre.

7. Dispositifs selon l'une des revendications précédentes, **caractérisés par** des miroirs ou prismes adaptés à plier une ligne visuelle d'une caméra du dispositif.

8. Dispositif selon l'une des revendications précédentes, **caractérisé en ce que** le dispositif de détection comporte un dispositif d'évaluation.

9. Dispositif selon la revendication 8, **caractérisé par** un dispositif éliminateur, lequel
• est connecté au dispositif d'évaluation,
• en direction de transport, est agence en aval d'une zone de détection, et
• est adapté à éliminer les matières étrangères.

10. Dispositif selon l'une des revendications précédentes, **caractérisé en ce que** la caméra comprend un filtre de polarisation comme analyseur.

11. Dispositif selon la revendication 10, **caractérisé en ce que** la caméra comprend un filtre, adapté à empêcher le passage de lumière UV et/ou de lumière infrarouge.

12. Dispositif selon l'une des revendications précédentes, **caractérisé par**
• une polarisation linéaire de la lumière,
• une polarisation circulaire de la lumière ou
• une polarisation elliptique de la lumière.

13. Dispositif selon l'une des revendications précédentes, **caractérisé en ce que** la source pour lumière polarisée et le dispositif de détection sont agencés de différents côtés des flocons de fibre.

14. Dispositif selon l'une des revendications précédentes, **caractérisé par** une suppression de réflexe.

15. Dispositif selon l'une des revendications précédentes, **caractérisé par** une reconnaissance des corps étrangers ou des impuretés de pareille couleur ou de pareille brillance.
